# EUROPEAN PATENT SPECIFICATION

(11) **EP 1 440 998 B1**
(45) Date of publication and mention of the grant of the patent: **07.05.2008**
(21) Application number: 04000734.6
(22) Date of filing: 15.01.2004
(51) Int. Cl.: C08J 3/20, C08K 3/34, C08L 7/00

(54) **Natural rubber composites containing smectite clay, methods of manufacture and uses thereof**
Smektitton enthaltende Naturgummikomposite, Verfahren zu ihrer Herstellung und ihre Verwendung
Composites à base de caoutchouc naturel contenant de l'argile smectite, procédés de leur production et leurs utilisations

(30) Priority: 27.01.2003 US 351661
(43) Date of publication of application: 28.07.2004
(73) Proprietor: Elementis Specialties, Inc., Hightstown, New Jersey 08520 (US)
(72) Inventor: Yaakub, Anuar, 68000 Ampang Selangor Darul Ehsan (MY); Kuen, Chan Pak, 600000 Kuala Lumpur (MY); Keane, Norman, 68100 Batu Caves Selangor Darul Ehsan (MY); Ross, Mark, Newtown PA 18940 (US)
(74) Representative: Metten, Karl-Heinz

(56) References cited:
- EP-A- 0 714 965
- JP-A- 6 172 657
- JP-A- 2002 114 870
- US-A- 2 531 396
- US-A- 5 576 373
- S.JOLY ET AL.: "Organically Modified Layered Silicates as Reinforcing Fillers for Natural Rubber" CHEM. MATERIALS, vol. 14, 21 September 2002 (2002-09-21), pages 4202-4208, XP009029367

## Description

### FIELD OF THE INVENTION

This invention relates to composite materials of natural rubber incorporating clay particles such as hectorite and bentonite and methods to make such composition materials. The composite materials of the present invention have improved physical properties such as modulus, elasticity, and especially improved coefficient of friction and wet abrasion resistance. This invention further relates to uses of the composite materials and articles manufactured from the composite materials.

### BACKGROUND OF THE INVENTION

Due to its outstanding physical and chemical properties, natural rubber has maintained its position as the preferred material in many engineering applications. Despite synthetic rubber having by far the far larger volume and dollar share of the worldwide rubber market, natural rubber continues, over hundred years after the invention of synthetic rubber, to be in high demand.

Natural rubber has better elasticity and resilience; it has a long fatigue life and high strength even without reinforcing fillers. It can be used to approximately 100 DEG C and maintains its flexibility down to -60 DEG C if compounded for the purpose. It has good creep and stress relaxation resistance and is low cost. When vulcanized, natural rubber has increased strength and elasticity and greater resistance to changes in temperature, and is impermeable to gases, and resistant to abrasion, chemical action, and has improved swelling resistance in hydrocarbons.

Surprisingly, the world's natural rubber use is today over 4,500,000 metric tons per annum. Many uses of natural rubber remain impossible to be performed by synthetic rubber. Of more importance, new uses of natural rubber are found yearly and this form of rubber remains a key research and development area of technology.

Many applications of natural rubber depend on its high coefficient of friction. These applications range from tires, shoes, flooring, conveyor belt, transmission belts, and wiper blades to aerospace, computer and advanced mining operations. It is generally understood that low modulus and low hardness increase the value of coefficient of friction (See e.g. R. Ohhara, 1996, Int. Polym Sci & Tech. Vol. 23(6), T/25).

In addition to high coefficient of friction, high abrasion resistance is also desired of many specialty rubber products. Notwithstanding the advent of synthetic elastomers, polymers, ceramics and abrasion resisting metals, natural rubber sheeting remains the primary choice for wet (slurry) abrasion resistance. Rubber sheeting with good wet abrasion resistance is widely used in the mining industry, either in the form of cured rubber sheet or in its uncured sheet form for vulcanizing to metal vessels and to protect tools and equipment from the effects of abrasive wear. Dry abrasion resistance is also important in applications such as in tires, shoe soles, flooring, general purpose sheeting and conveyor belt covers. Even though synthetic rubbers are used extensively in dry abrasion applications, they are inferior to natural rubber in cutting and chipping resistance.

Often, increases in coefficient of friction coupled with improved dry abrasion resistance are highly desired, such as in the manufacturing of transmission belt covering used in applications such as postal letter-sorting machines, form-fill-seal packaging machines, and box folding machines. Similarly, rubber compositions with high coefficient of friction or higher wet abrasion resistance or both would be highly desirable in the manufacturing of certain industrial or consumer rubber products.

High coefficient of friction in rubber, however, generally is accompanied by low abrasion resistance, because, in the view of most rubber scientists, dry abrasion resistance increases with increasing rubber hardness. (See Ohhara, *supra*).

There is therefore a need for natural rubber compositions that have increased coefficient of friction, while maintaining other desirable physical and chemical characteristics, such as wet abrasion resistance and/or dry abrasion resistance. There is especially a long felt need for natural rubber compositions that possess both increased coefficient of friction and high dry abrasion resistance.

Addition of layered clay minerals, which comprise silicate layers with a thickness of about 1 nanometer, to artificial polymers most often polymers derived from oil and its byproducts to form nanocomposites has been widely used to improve physical, especially mechanical properties of the polymer.

Application of nanocomposite techniques to natural rubber products, however, is still in a very early stage.

A very early U.S. Patent No. 2,531,396 to Carter et al.*,* discloses a composition comprising an elastomer base mixed with a modified clay in which the inorganic cation has been replaced with a substituted organic onium base.

U.S. Patent No. 6,034,164 to Elspass and Peiffer discloses a polymer nanocomposite composition comprising two polymers, prepared by melt-blending, wherein the polymers and a layered clay material such as hectorite modified by reaction with a cationic surfactant are blended in a melt. The first polymer is a melt processible elastomer such as natural rubber. This patent is concerned with producing a composition having low air permeability to be useful for tire inner linings.

U.S. Patent No. 5,883,173 to Elspass et al. discloses (a) an *in-situ* polymerization process and (b) a second method process for producing a nanocomposite of polymers such as butyl rubber and layered silicate materials such as hectorite clay. The *in-situ* polymerization process comprises forming a dispersion of the layered material in water containing a surfactant such as an onium salt; adding a polymerizable monomer or monomers and a polymerization initiator to the dispersion; and polymerizing the monomer or monomers to form the latex. In the emulsion polymerization process, the surfactant is added to a mixture of preformed polymer and non-polar liquid thereby forming an emulsion or micro-emulsion, and the a layered material is added to the emulsion, which is then subjected to shearing forces sufficient to form a latex.

U.S. Patent No. 4,889,885 to Usuki et al. is related to a composite material comprising a resin and a layered silicate uniformly dispersed in the resin, wherein the resin is connected to the silicate through an ionic bond. In order to prepare such a composite, the clay articles are subjected to an ion exchange step with an onium salt before being mixed with a monomer or oligomer of the resin. The resultant composite is disclosed to have improved water and chemical resistance. Increased coefficient of friction or abrasion resistance, however, was not discussed.

U.S. Patent 5,747,560 discloses a composite material comprising a polymer matrix which comprises a melt processible polymer having a melt processing temperature equal to or greater than about 220 °C, and dispersed platelet particles having average thickness less than 50 Å and a maximum thickness of about 100 Å, and having an onium chemical species bonded to them. The resulting composite material is disclosed to have improved microstructure and enhanced chemical stability.

EP 1,125,978 discloses a method for preparing a latex rubber product by forming an aqueous bentonite electrolytic dispersion and mixing a latex compound with the dispersion, followed by drying. This patent uses an electrolyte solution of aluminum potassium sulfate and calcium sulfate to improve the stability and reduce the viscosity of bentonite clay/water dispersions. The clay particle sizes quoted in the patent are typically 0.5 microns.

A latex processing method is disclosed in Wang et al., 2000, J. Appl. Polymer Sci., 78:1879-1883, wherein bentonite clay is dispersed in water with strong stirring and styrenic-butadiene rubber latex was added and mixed, followed by coagulation with diluted hyrocholoric acid solution. The article also discloses a solvent method, wherein organic modified clay was dispersed in toluene with stirring, then a rubber-toluene solution was added and stirred vigorously, followed by the final step of removal of the solvent to form a nanocomposite.

Rubber compounds based on natural rubber containing organically modified mont-morillonites are described in July et al., Organically Modified Layered Silicates As Reinforcing Fillers For Natural Rubber, 2002 Chem. Materials, 14, 4202-4208 published September 21, 2002. Various experiments studying composites based on cis-1, 4-polyiosprene, natural rubber and epoxidized natural rubber and an organically modified montmorillonite are discussed.

JP 2002/114870 A discloses mixtures of betonite and diene-based rubbers and/or natural rubber. These compositions are for example used in tubeless pneumatic tires. Different from conventional bulking agents bentonite has been found to furnish excellent air impermeability when for example 5 to 60 parts per weight bentonite and 100 parts per weight of a diene-based rubber are used.

In US 5,576,373 a tire inner-tube comprising a complex and a solid rubber is disclosed. Said complex is composed of a reactive rubber having at least one positively charged group and a layered silicate which is uniformly dispersed therein. The interlayer distance of the layered silicate has to be greater than 12 angstroms and the reactive rubber has to be soluble in or cross-linkable with the solid rubber. Suitable solid rubbers include natural rubber, synthetic rubber, thermoplastic elastomers and blends thereof. The layered silicate, which is dispersed in the reactive rubber, is ionically associated to or bonded with the positively charged groups of the reactive rubber. Suitable positively charged reactive groups include ammonium, sulfonium and phosphonium groups which can be in the main chain or the side chain of the reactive rubber or at the terminal end thereof. The polymer clay compositions of US 5,576,373 can be used as inner tubes or inner liners of tires and furnish improved air barrier characteristics.

There is a need for composite natural rubber materials that have increased coefficient of friction, or increased abrasion resistance, or both.

### SUMMARY OF THE INVENTION

In one aspect, this invention relates to composite materials of natural rubber according to the features of claim 5. The materials of the present invention have improved physical properties such as modulus, hardness, tensile strength and tear strength and especially improved coefficient of friction and improved wet (or slurry) abrasion resistance and possess satisfactory dry abrasion resistance.

This invention further relates to methods to make such materials according to claims 1 and 2, uses of the materials according to claim 11, and articles manufactured from the materials according to claim 10.

### BRIEF DESCRIPTION OF THE DRAWINGS

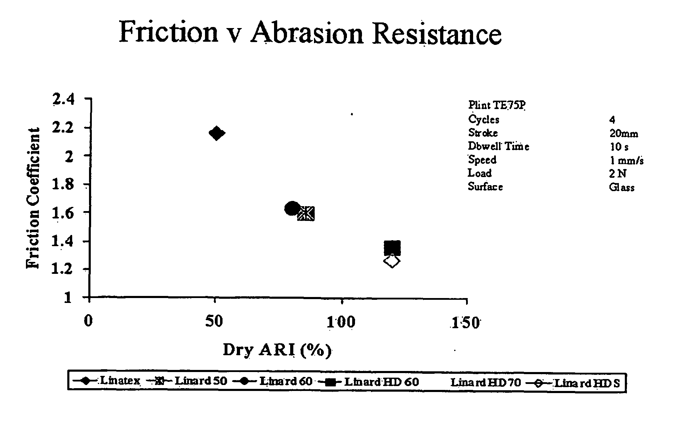

**Fig. 1** shows the relationship between friction coefficient and dry abrasion resistance of various commercially available rubber products in the prior art.
As shown in Fig. 1, commercial rubber products (e.g. Linatex products by Linatex Ltd, Wilkinson House, Blackbushe, U.K.) currently available on the market reflect a trade off between satisfactory dry abrasion resistance and high coefficient of friction - note that Figure 1 shows there is an inverse relationship between abrasion resistance and coefficient of friction.

### DETAILED DESCRIPTION OF PREFERRED EMBODIMENTS

In general, it is believed by scientists working in the field of natural rubber that low modulus or low hardness is required for high coefficient of friction. Low modulus and low hardness, however, generally are believed to cause low dry abrasion resistance.

Although clays have been used to improve physical properties of polymers such as natural rubber, the present inventors have now surprisingly discovered that the addition of bentonite or hectorite clays leads to an increase in the coefficient of friction of the rubber even though the modulus of the rubber compositions is also increased. This is contrary to expectations based on fillers such as carbon black and silica.

Clays useful for this invention are smectite clays and most preferred are the smectite clays bentonite and hectorite with Wyoming Bentonite preferred and hectorite most preferred. Chemical formulas descriptive of hectorite and bentonite (and other useful smectite clays) are shown in U.S. Patent No. 5,718,841 issued to the assignee hereof. Sodium bentonite and hectorite, the latter of which is normally found in the sodium form can be used. Also useful are calcium and magnesium bentonites, synthetic hectorites and other smectite clays such as saponite.

As discussed, the polymers for the present invention are natural rubber and products made therefrom. Natural rubber latex suitable for the present invention include, for example, high HA (*high-ammonia*) latex, preserved with 0.7% ammonia, and LATZ (*low ammonia of 0.2 %*) latex, or field latex.

LATZ is a natural rubber latex. Information for LATZ may be found in ISO Standard 2004 - 1988, Natural rubber latex concentrate - centrifuged or creamed ammonia preserved types - specification, which is hereby incorporated by reference.

Polymers whose coefficient of friction can be improved by addition of such clays include all those using natural rubber (NR) or made therefrom. Included in the definition of natural rubber are derivative products made or derived from natural rubber, including epoxidized natural rubber, styrene-butadiene rubber (SBR), nitrile rubber (NBR), polyisoprene (IR), and polychlorprene/neoprene (CR).

The material according to the invention comprises natural rubber and a layered clay material wherein the clay material is dispersed in the natural rubber, and wherein the nanocomposite material has a coefficient of friction of not less than about 2.3, and a wet abrasion resistance index of not less than about 100%. Amounts of the clay material (per hundred parts of rubber) from about 1 to 20 parts clay material with 6 to 12 parts being preferred.

Rubber compositions with both increased coefficient of friction and improved wet abrasion resistance have wide-spread industrial applications, such as in the manufacturing of transmission belt covering and in mineral process tank lining. Other articles of commerce which will use the inventive rubber composite include shoe soles, industrial floor mats, tire manufacturing pulley & idler lagging and conveyor belting, as well as a wide variety of other uses.

It is believed that the above surprising effectiveness of the rubber-clay composition were achieved by use of a natural rubber latex with a smectite clay, optionally with the addition of a surfactant to improve the stability of the clay/water/rubber dispersion.

In another embodiment, the invention is a method for making a material, wherein the material comprises natural rubber and a layered smectite clay material, wherein the clay material is dispersed in the natural rubber, creating the nanocomposite material with a coefficient of friction of not less than about 2.3µ, and a wet abrasion resistance index of not less than about 100%.

In one process, the method comprises preparing a slurry of the layered clay material by dispersing in water the layered clay material; preparing a mixture of a rubber latex with vulcanization chemicals; and mixing the clay slurry and the mixture of rubber latex together with continuous stirring until the material pre-coagulates.

Specifically, according to a preferred embodiment of the present invention, a clay slurry is first prepared, which is then optionally mixed with one or more anionic surfactant to form a slurry mixture. An anionic surfactant such as Darvan WAQ can be used. The surfactant can increase the stability of the slurry/natural rubber mixes. Being ionic in nature, the clays can have a destabilizing effect on the natural rubber latex and can cause it to coagulate. A large variety of other anionic surfactants can be used; cationic surfactants should be avoided.
Separately, a mixture of vulcanization chemicals of the type generally known should be prepared and mixed with natural rubber latex, to produce a mixture of such latex and vulcanization chemicals. The two mixtures are compounded together to form a pre-coagulated rubber composition of the present invention. Such composition is then dried using techniques well known in the industry.

### 1. Preparation of a Representative Clay Slurry

Through a dispersion process, fine clay, usually a powder, is dispersed into water using a mechanical stirrer, such as the Silverson high-speed stirrer model SL2T, available from Christison Scientific Equipment, Ltd., Gateshead, UK). Preferably, the final slurry has a solid clay content of between 3-8% by weight - this range can reach 10% when hectorite clay is employed.

The appropriate amount of clay powder and water are first measured, and the clay is added to the water in a controlled manner while stirring. Rapid size reduction is achieved by using the square hole high shear screen of the SL2T. A suitable flow pattern should be ensured. Depending on the size of the container the range of speed required is around 4500 to 5000 rpm. As the viscosity increases, the speed should be increased to 7500 rpm upon full incorporation of powder clay. The mixing is continued to run for 30 minutes until fully dispersed.

### 2. Mixing of Surfactant into the Clay Slurry

In order to pre-stabilize the slurry and permit, if desired, a lengthening of the mixing time with rubber latex, a surfactant is preferably mixed into the slurry prior to compounding.

If a surfactant is used, the amount of the surfactant in the clay slurry is important in ensuring proper coagulation of the compounded rubber latex. Preferably, we use the term "phr" which means "parts per hundred rubber (sometimes also "pphr,").

There is a relationship which should be usually taken into account between the dosage of clay and the dosage of surfactant with the preferred ratio being about 12:1. For example, 100 part of rubber is to be added with 6 phr of clay, 2.5 parts of 20 % surfactant solution is added to 75 parts of 8 % Clay slurry.

At 20% wt./wt., the preferred dosages are as below:

| **Dosage of clay (Bentonite and Hectorite)** | **Dosage of surfactant** |
|---|---|
| 6 phr | 0.5 phr |
| 9 phr | 0.75 phr |
| 12 phr | 1 phr |

The surfactant is added into the slurry and stirred gently for 5 minutes in order to pre-stabilize the slurry. Gentle stirring is preferred to avoid formation of bubbles. This produces a slurry-surfactant mixture.

### 3. Illustrative Compounding of Clay Slurry with Rubber Latex

The clay slurry with or without surfactant can be compounded with rubber latex according to the steps described below.

First a mixture of vulcanization chemicals is prepared which can contain, for example, curing agents (e.g. sulfur), antioxidants, activators (e.g. zinc oxide), accelerators (e.g. cyclohexylbenzothiazyl sulfenamide (CBS)), dispersing agents (e.g. sodium salt of polyacrylic acid, thixotropic agent(s) to reduce chemical sedimentation on storage and pigments.

The above representative ingredients are then mixed with a latex rubber, such as LATZ latex concentrate (60 % dry rubber content), to prepare a mixture of latex and vulcanization chemicals. Specifically, the required amount of chemical dispersion is added into the latex and stirred until the chemicals are uniformly dispersed in the latex, to produce a latex-chemical mixture.

The latex-chemical mixture is added to the slurry-surfactant mixture rapidly with vigorous stirring. Continue stirring until the compounded latices coagulate. This is followed by drying of the coagulated rubber or coagulum to below 1.5 % moisture.

### 4. Representative Drying using A Microwave heating process

A domestic oven was found suitable for this purpose. The procedure was as follows: 1). 200g of the coagulated rubber was placed on a polyester film in a heat resistant container; 2). The polyester was folded to ensure no sticking to the side of container. 3). The compound was sheeted out by using a heavy steel roller. This allowed for maximum drying. 4). Drying occurred for 20 minutes at 100° C. 5). Cooling down was for 30 minutes. And 6). The compound was masticated using 2-roll mill. Rheological properties such as viscosity was checked before the vulcanization process.

### 5. Physical Properties Tests

Physical property tests for the composites materials follow those protocols generally well-known to a person of ordinary skills in the art. The following descriptions are offered as instructional and general guidelines only.

### 1). Mooney Viscosity

Reference: ISO 289 or DIN 53523/3 (determination of Mooney Viscosity of vulcanized rubber).

Equipment: Sondes Mooney Viscometer

Viscosity is generally defined as the ability of fluid to resist flow. For unvulcanized rubber, viscosity may also describe the resistance for any deformation other than flow behavior. Mooney viscometer or shearing disc viscometer is also useful for recording the changes in viscosity during vulcanization and hence the course of curing.

Typically, viscosity values for the various composites of the instant invention fall in the following ranges:

| **Sample** | **Mooney viscosity at 100° C** |
|---|---|
| 0 phr of clay Natural Rubber (Control) | 75-85 |
| 6 phr of hectorite | 86-95 |
| 9 phr of hectorite | 93-103 |
| 12 phr of hectorite | 105-120 |

### 2). Hardness.

Reference: ISO 48 - 1994.

Equipment: Dead load Wallace IRHD hardness tester.

For the various composites of the instant invention, hardness as measured typically fall in the following ranges for bentonite and hectorite:

| **Type of rubber** | **Hardness (IRHD)** |
|---|---|
| 0 phr of clay i.e. Natural Rubber gum (Control) | 45 ± 5 |
| 6 phr of clay | 46 - 52 |
| 9 phr of clay | 50 - 54 |
| 12 phr of clay | 52 - 58 |

### 3). Stress-Strain Properties

Rubber scientists often measure stress-strain properties to determine if the rubber is satisfactory commercially.

Reference: ISO 37 - 1994.

Equipment: Monsanto Tensometer 10.

Three separate strength measurements typically are made: Tensile Strength (Tensile Break or T.B.); Elongation at break or E @ B; and Modulus.

### 4). Tear Strength

Reference: ISO 34 - 1994 Method C (Crescent shape test piece).

Equipment: Monsanto Tensometer 10.

Tear strength typically falls in the following ranges:

| **Type of rubber** | **Tear strength (N/mm)** |
|---|---|
| 0 phr of clay i.e. Natural Rubber gum (Control) | 44 - 49 |
| 6 phr of clay | 41 - 70 |
| 9 phr of clay | 40 - 54 |
| 12 phr of clay | 37 - 42 |

### 5). Rebound resilience

Reference: BS 903:Part A58

Equipment: Dunlop Tripsometer.

Rebound resilience typically falls in the following ranges:

| **Type of rubber** | **Rebound resilience (%)** |
|---|---|
| 0 phr of clay i.e. Natural Rubber gum (Control) | 82 - 87 |
| 6 phr of clay | 82 - 85 |
| 9 phr of clay | 80 - 82 |
| 12 phr of clay | 77 - 82 |

### 6). Abrasion resistance

Abrasion resistance is measured according to a modified procedures described in DIN 53516, ISO 4649 (Dry abrasion) and Modified ISO 4649 (Wet abrasion), using Zwick DIN Abrader. Specifically, the modification lies in the use of a water resistant abrasive belt, and the rotating drum covered with abrasive paper is partially immersed in a trough of water below, thereby ensuring the abrasive belt to be in contact with test specimens and uniformly wetted during testing. Typically, ranges of Wet ARI values are

| **Type of rubber** | **Wet ARI (%)** |
|---|---|
| 0 phr of clay i.e. Natural Rubber gum (Control) | 100 |
| 6 phr of Hectorite clay 6 phr of Bentonite clay | 116-123 109 - 111 |
| 9 phr of Hectorite clay 9 phr of Bentonite clay | 126 - 139 100 - 102 |
| 12 phr of Hectorite clay 12 phr of Bentonite clay | 139 85 |

and ranges of Dry ARI value are:

| **Type of rubber** | **Dry ARI (%)** |
|---|---|
| 0 phr of clay i.e. Natural Rubber gum (Control) | 45 |
| 6 phr of Hectorite clay 6 phr of Bentonite clay | 51-61 57-59 |
| 9 phr of Hectorite clay 9 phr of Bentonite clay | 56-70 52 - 54 |
| 12 phr of Hectorite clay 12 phr of Bentonite clay | 72 52 |

### 7). Specific Gravity (S.G)

Specific gravity typically is measured according to ISO 2781: Method A, BS 903:Part A1 using a densimeter and normally does not change significantly when measured.

### 8). Friction

Friction coefficient is measured with a Plint TE 75P Rubber Friction Test Machine (developed by Tun Abdul Razak Research Laboratory, Malaysian Rubber Research Development Board, Brickendonbury, UK). *See* e.g. A.F Alliston-Greiner, Friction Test Machines for Rubbery Materials, Plint and Partners Ltd., Wokingham, UK, 63 - 75, 1994. The Plint TE 75P Rubber Friction Test Machine is designed to determine the nature of rubber friction under certain test conditions. Typical contact configurations are ball on rubber flat and plate on rubber hemisphere. The friction force is measured through single axis traverse movement. The testing parameters used are

| Test load | 2N |
|---|---|
| Sliding speed | 1 mm/s |
| Dwell period | 5 seconds |
| No. of cycles | 4 |
| Maximum friction | 50N |

and ranges for coefficient of friction were measured as follows:

| **Type of rubber** | **Coefficient of friction** |
|---|---|
| 0 phr of clay i.e. Natural Rubber gum (Control) | 1.90 - 2.29 |
| 6 phr of Hectorite clay | 2.57 - 2.84 |
| 6 phr of Bentonite clay | 2.57 - 2.64 |
| 9 phr of Hectorite clay 9 phr of Bentonite clay | 2.75 - 2.90 2.73 |
| 12 phr of Hectorite clay 12 phr of Bentonite clay | 2.56 2.57 |

Any natural or synthetic layered mineral or clay capable of being intercalated may be employed for addition to the polymers to improve their coefficient of friction; however, layered silicate minerals specifically bentonite and hectorite are preferred. The layered silicate minerals that also may be employed in the present invention include natural and artificial minerals capable of forming intercalation compounds. Examples of such minerals include smectite clay (bentonite), montmorillonite, saponite, beidellite, montronite, hectorite, attapulghite, and synthetic hectorite.

In preferred embodiments, hectorite or bentonite clays are used to constitute rubber-clay composite of the present invention.

Preferably, the compositions of the present invention contains not more than 12 parts per hundred (pph) parts of clay. More preferably, the clay content is not more than 6 to 9 pph of rubber.

### EXAMPLES

### Example 1. Compositions and Physical Properties of Rubber Composites Containing Surfactants

### 1. Formulations

The following table lists the ingredient amounts for four preparations (one control, and three composites with different clay contents).

Three types of clays were used in these examples: hectorite from Hector, California (supplied by Elementis Specialties, Inc., Lot#54), Wyoming bentonite (supplied by Elementis Specialties, Inc., Lot#55), and hectorite from Hector, California with phosphonate dispersing agent, (supplied by Elementis Specialties, Inc., Lot #58).

**Table 1. Latex and Clay Content of Preparations Containing Surfactants**

| | **Dosage of clay (parts per hundred rubber)** | | | |
|---|---|---|---|---|
| **Ingredients** | **0 phr** | **6 phr** | **9 phr** | **12 phr** |
| LATZ latex | 1000 ml | 1000 ml | 1000 ml | 1000 ml |
| Dispersion of vulcanizing chemicals | 69 ml | 69 ml | 69 ml | 69 ml |
| 20% Darvan WAQ | - | 11.3 g | 22.6 g | 33.8 g |
| 8 % Clay Slurry | - | 264 ml | 397 ml | 529 ml |
| 20% Coagulant | 10 ml | - | - | - |

### 2. RHEOLOGICAL PROPERTIES

**Table 2. Rheological Properties of Rubber Composites Tested**

| | | | | | | | | | | |
|---|---|---|---|---|---|---|---|---|---|---|
| Sample | **Control** | **6 PHR** | | | **9 PHR** | | | **12 PHR** | | |
| Sample | Control | **#54** | **#55** | **#58** | **#54** | **#55** | **#58** | **#54** | **#55** | **#58** |
| **Maximum torque or MH Kg (lbs)** | 20.77 (45.8) | 20.05 (44.2) | 20.28 (44.7) | 21.46 (47.3) | 21.09 (46.5) | 22.86 (50.4) | 22.68 (50.0) | 22.18 (48.9) | 22.82 (50.3) | 20.50 (45.2) |
| **Minimum torque or ML Kg (lbs)** | 8.80 (19.4) | 8.80 (19.4) | 7.89 (17.4) | 7.89 (17.4) | 9.34 (20.6) | 9.57 (21.1) | 8.94 (19.7) | 10.89 (24.2) | 11.43 (25.2) | 10.34 (22.8) |
| **Scorch time or TS2 (min)** | 7.01 | 11.2 | 12.6 | 8.4 | 7.6 | 11.5 | 4.9 | 4.8 | 3.8 | 1.6 |
| **Curing time or Tc90 (min)** | 11.2 | 14.9 | 16.8 | 12.4 | 11.6 | 16.3 | 9.0 | 10.1 | 9.2 | 6.5 |

Measured using a Monsanto Rheometer ODR 2000 at 140° C Arc 3 degrees.

### 3. Physical Properties

**Table 3. Physical Properties of #54 (Hectorite)**

| | Dosage of Hectorite clay | | | |
|---|---|---|---|---|
| | **0 phr** | **6 phr** | **9 phr** | **12 phr** |
| **Mooney Viscosity (Mooney units)** | 81 | 94 | 100 | 105 |
| **Hardness (IRHD)** | 39 | 48 | 50 | 52 |
| **Tensile Strength (MPa)** | 20.9 | 23.7 | 21.7 | 14.0 |
| **Modulus at 500 % (MPa)** | 2.2 | 5.2 | 7.0 | 8.1 |
| **Elongation at Break (%)** | 900 | 820 | 760 | 630 |
| **Tear Strength (N/mm)** | 49 | 52 | 44 | 42 |
| **Rebound Resillience (%)** | 86 | 84 | 82 | 78 |
| **Wet Abrasion Resistance Index (%)** | 100 | 120 | 126 | 139 |
| **Dry Abrasion Resistance Index (%)** | 47 | 60 | 70 | 72 |
| **Density (g/cm³)** | 0.95 | 0.99 | 0.99 | 1.02 |
| **Mean Friction (µ)** | 2.28 | 2.60 | 2.78 | 2.56 |

**Table 4. Physical Properties of Rubber Containing #55 (Bentonite)**

| | Dosage of Bentonite clay | | | |
|---|---|---|---|---|
| | **0 phr** | **6 phr** | **9 phr** | **12 phr** |
| **Mooney Viscosity (Mooney units)** | 81 | 95 | 103 | 119 |
| **Hardness (IRHD)** | 39 | 51 | 54 | 58 |
| **Tensile Strength (MPa)** | 20.9 | 21.5 | 19.3 | 10.9 |
| **Modulus at 500 % (MPa)** | 2.18 | 7.44 | 8.22 | 9.01 |
| **Elongation at Break (%)** | 900 | 730 | 700 | 550 |
| **Tear Strength (N/mm)** | 49 | 41 | 40 | 37 |
| **Rebound Resillience (%)** | 86 | 83 | 80 | 77 |
| **Wet Abrasion Resistance Index (%)** | 100 | 109 | 100 | 85 |
| **Dry Abrasion Resistance Index (%)** | 47 | 57 | 54 | 52 |
| **Density (g/cm³)** | 0.950 | 0.99 | 1.00 | 1.02 |
| **Mean Friction (µ)** | 2.28 | 2.57 | 2.73 | 2.57 |

**Table 5. Physical Properties of Rubber Containing #58 (Hectorite with 6% dispersing agent)**

| | Dosage of Hectorite clay | | |
|---|---|---|---|
| | **0 phr** | **6 phr** | **9 phr** |
| **Mooney Viscosity (Mooney units)** | 74 | 89 | 93 |
| **Hardness (IRHD)** | 38 | 47 | 51 |
| **Tensile Strength (MPa)** | 26.6 | 28.4 | 25.7 |
| **Modulus at 500 % (MPa)** | 2.2 | 6.3 | 7.9 |
| **Elongation at Break (%)** | 940 | 820 | 770 |
| **Tear Strength (N/mm)** | 49 | 57 | 54 |
| **Rebound Resillience (%)** | 87 | 84 | 81 |
| **Wet Abrasion Resistance Index (%)** | 97 | 116 | 136 |
| **Dry Abrasion Resistance Index (%)** | 42 | 51 | 56 |
| **Density (g/cm³)** | 0.95 | 0.99 | 1.00 |
| **Mean Friction (µ)** | 2.02 | 2.69 | 2.75 |

### Discussion:

The above show that for both bentonite and hectorite clays, there is a corresponding rise in Mooney viscosity, hardness, modulus and coefficient of friction with increased level of clay incorporation; while the elongation at break and rebound resilience decline. There is an optimum dosage for higher tensile and tear strength.

It is significant that the incorporation of hectorite clay (with or without the dispersing agent) leads to higher wet and dry abrasion resistance and such trend was not observed with bentonite clay. In this respect, hectorite clay is superior to bentonite clay.

9 phr of Hectorite appears to be the preferred dosage in terms of coefficient of friction and abrasion resistance albeit with slight decline in tensile and tear strength. If the latter properties are critical, 6 phr will be preferred.

### Example 2. Compositions and Physical Properties of Rubber Composites Containing No Surfactants

### 1. Formulations

**Table 6. Latex and Clay Content of Preparations Containing No Surfactants**

| | Dosage of clay | | |
|---|---|---|---|
| **Ingredients** | **0 phr** | **6 phr** | **9 phr** |
| LATZ latex | 1000 ml | 1000 ml | 1000 ml |
| Vulcanization chemicals | 69 ml | 69 ml | 69 ml |
| 8% Clay Slurry | - | 264 ml | 397 ml |
| 20% Coagulant | 10 ml | - | - |

**Table 7. Rheological Properties of Preparations Containing No Surfactants**

| **Sample** | **0 phr or control** | **6 PHR** | | | **9 PHR** | | |
|---|---|---|---|---|---|---|---|
| | | **#54** | **#55** | **#58** | **#54** | **#55** | **#58** |
| **Maximum torque or MH Kg (lbs)** | 17.19 (37.9) | 20.96 (46.2) | 21.18 (46.7) | 19.50 (43.0) | 22.18 (48.9) | 20.87 (46.0) | 19.96 (44.0) |
| **Minimum torque or ML Kg (lbs)** | 7.44 (16.4) | 9.53 (21.0) | 9.03 (19.9) | 7.76 (17.1) | 10.70 (23.6) | 8.26 (18.2) | 8.48 (18.7) |
| **Scorch time or TS2 (min)** | 5.7 | 12.9 | 14.5 | 9.8 | 11.5 | 11.9 | 10.2 |
| **Curing time or TC90 (min)** | 10.1 | 17.9 | 19.1 | 14.9 | 16.1 | 16.9 | 14.8 |

### 2. Comparison of Physical Properties of Composites with and without surfactants.

Further work indicated that the invention could work without surfactant addition despite its ability in enhancing stability prior to coagulation. There is no significant difference in modulus and coefficient of friction but the tensile strength is higher with hectorite clay without the dispersing agent. Darvan WAO was used.

**Table 8. Comparison of Physical Properties of Nanocomposites of LATZ-hectorite (#54) with and without Surfactant**

| | **Control** | 6 phr | | 9 phr | |
|---|---|---|---|---|---|
| **Surfactant** | N/A | Yes | No | Yes | No |
| **Mooney Viscosity (Mooney units)** | 81 | 94 | 92 | 100 | 101 |
| **Hardness (IRHD)** | 39 | 48 | 50 | 50 | 52 |
| **Tensile Strength(MPa)** | 20.9 | 23.7 | 25.5 | 21.7 | 23.9 |
| **Modulus at 500 % (MPa)** | 2.2 | 5.2 | 5.7 | 7.0 | 8.4 |
| **Elongation at Break (%)** | 900 | 820 | 840 | 760 | 760 |
| **Tear Strength (N/mm)** | 49 | 52 | 52 | 44 | 46 |
| **Wet Abrasion Resistance Index (%)** | 100 | 120 | 123 | 126 | 132 |
| **Dry Abrasion Resistance Index (%)** | 47 | 60 | 61 | 70 | 70 |
| **Density (g/cm³)** | 0.95 | 0.99 | 0.99 | 0.99 | 1.00 |
| **Mean Friction (µ)** | 2.28 | 2.60 | 2.7 | 2.78 | 2.79 |

**Table 9. Comparison of Physical Properties of Nanocomposites of LATZ-Bentonite (#55) with and without Surfactant**

| | **Control** | 6 phr | | 9 phr | |
|---|---|---|---|---|---|
| **Surfactant** | N/A | Yes | No | Yes | No |
| **Mooney Viscosity (Mooney units)** | 84 | 95 | 92 | 103 | 98 |
| **Hardness (IRHD)** | 46 | 51 | 52 | 54 | 54 |
| **Tensile Strength(MPa)** | 22.3 | 21.5 | 25.6 | 19.3 | 23.3 |
| **Modulus at 500 % (MPa)** | 1.8 | 7.4 | 7.2 | 8.2 | 7.7 |
| **Elongation at Break (%)** | 980 | 730 | 810 | 700 | 780 |
| **Tear Strength (N/mm)** | 45 | 41 | 51 | 40 | 46 |
| **Wet Abrasion Resistance Index (%)** | 99 | 109 | 111 | 100 | 102 |
| **Dry Abrasion Resistance Index (%)** | 42 | 57 | 59 | 54 | 52 |
| **Density (g/cm³)** | 0.96 | 0.99 | 0.98 | 1.00 | 1.00 |
| **Mean Friction (µ)** | 2.11 | 2.57 | 2.64 | 2.73 | 2.73 |

**Table 10. Comparison of Physical Properties of Nanocomposites of LATZ-Hectorite-Dispersing Agent (#58) with and without Surfactant**

| | **Control** | 6 phr | | 9 phr | |
|---|---|---|---|---|---|
| **Surfactant** | N/A | Yes | No | Yes | No |
| **Mooney Viscosity** | 84 | 89 | 95 | 93 | 101 |

| **(Mooney units)** | | | | | |
|---|---|---|---|---|---|
| **Hardness (IRHD)** | 40 | 47 | 47 | 51 | 52 |
| **Tensile Strength(MPa)** | 22.3 | 28.4 | 28.8 | 25.7 | 25.2 |
| **Modulus at 500 % (MPa)** | 1.8 | 6.3 | 7.3 | 7.9 | 8.2 |
| **Elongation at Break (%)** | 980 | 820 | 850 | 770 | 810 |
| **Tear Strength (N/mm)** | 45 | 57 | 70 | 54 | 50 |
| **Wet Abrasion Resistance Index (%)** | 99 | 116 | 116 | 136 | 139 |
| **Dry Abrasion Resistance Index (%)** | 42 | 51 | 50 | 56 | 60 |
| **Density (g/cm³)** | 0.96 | 0.99 | 0.99 | 1.00 | 1.00 |
| **Mean Friction (µ)** | 2.11 | 2.69 | 2.84 | 2.75 | 2.90 |

## Claims

1. A method for making a material comprising natural rubber and a layered smectite clay wherein the clay is dispersed in the natural rubber, the method comprising:
a) preparing a mixture of clay and a rubber latex; and
b) adding to the mixture vulcanization chemicals and an anionic surfactant; and
c) coagulating the mixture to form the material; and
d) drying the material as obtained in step c);
wherein the material has a coefficient of friction of not less than 2.3 µ and a wet abrasion resistance index of not less than 100%, wherein the coefficient of friction is measured with a Plint TE 75P Rubber Friction Test Machine by use of a test load of 2N, a sliding speed of 1 mm/s, a dwell period of 5 seconds, a maximum friction of 50N and by use of 4 cycles, the friction force being measured through single axis traverse movement, and wherein the wet abrasion resistance index is measured according to a procedure described in Modified ISO 4649 using a Zwick DIN Abrader by using a water resistant abrasive belt and wherein a rotating drum covered with abrasive paper is partially immersed in a trough of water below, thereby ensuring the abrasive belt to be in contact with the test specimen and uniformly wetted during testing.

2. A method for making a material comprising natural rubber and a layered smectite clay wherein the clay is dispersed in the natural rubber, the smectite clay being selected from the group consisting of bentonite and hectorite, the method comprising:
a) preparing a slurry of a smectite clay by dispersing said clay in water;
b) preparing a mixture of natural rubber latex with vulcanization chemicals;
c) mixing the slurry and the mixture containing rubber latex with continuous stirring to form a second mixture until the mixture coagulates, and
d) drying the mixture to below 1.5% of water;
wherein the material has a coefficient of friction of not less than 2.3µ and a wet abrasion resistance index of not less than 100%
wherein the coefficient of friction is measured with a Plint TE 75P Rubber Friction Test Machine by use of a test load of 2N, a sliding speed of 1 mm/s, a dwell period of 5 seconds, a maximum friction of 50N and by use of 4 cycles, the friction force being measured through single axis traverse movement, and wherein the wet abrasion resistance index is measured according to a procedure described in Modified ISO 4649 using a Zwick DIN Abrader by using a water resistant abrasive belt and wherein a rotating drum covered with abrasive paper is partially immersed in a trough of water below, thereby ensuring the abrasive belt to be in contact with the test specimen and uniformly wetted during testing.

3. The method according to Claim 1 or 2, wherein the vulcanization chemicals comprise at least one of a curing agent, an antioxidant, an activator, an accelerator, a dispersing agent and a pigment.

4. The method according to Claim 2, wherein an anionic surfactant is added in step a) or to the second mixture.

5. A material produced by the method of claim 1 or by the method of claim 2.

6. The material according to Claim 5, wherein the wet abrasion resistance index is between 101% and 136%.

7. The material according to Claim 5, wherein the material comprises 1 to 20 parts clay per hundred parts of rubber by weight.

8. The material according to Claim 5, wherein the clay is hectorite and the hectorite comprises 6 to 12 parts per hundred parts of rubber by weight.

9. The material according to Claim 5, wherein the layered clay material is sodium bentonite.

10. An article of manufacture comprising the composition of Claim 5.

11. The article according to Claim 10, selected from the group consisting of tires, conveyer belts, transmission belt coverings, shoe soles, industrial floor mats, pulley & idler lagging and conveyor belting.

12. Use of a material according to one of claims 5 to 9 in mining operations.

## Patentansprüche

1. Verfahren für die Herstellung eines Materials, umfassend Naturkautschuk und einen smektischen Schichtton, wobei der Ton im Naturkautschuk dispergiert ist und wobei das Verfahren umfasst:
a) Zubereitung eines Gemisches aus Ton und einem Kautschuklatex; und
b) Hinzufügung von Vulkanisierungschemikalien und einem anionischen grenzflächenaktiven Stoff zum Gemisch; und
c) Koagulation des Gemisches zur Ausbildung des Materials; und
d) Trocken des beim Schritt c) erhaltenen Materials;
wobei das Material einen Reibungskoeffizienten von nicht weniger als 2,3 µ und einen Nassabriebfestigkeitsindex von nicht weniger als 100 % aufweist, wobei der Reibungskoeffizient mit einem Plint TE 75P Kautschukreibungstestgerät gemessen wird, mit Hilfe einer Testlast von 2N, einer Gleitgeschwindigkeit von 1 mm/s, einer Verweilzeit von 5 Sekunden, einer maximalen Reibung von 50N und dem Einsatz von 4 Zyklen, wobei die Reibungskraft durch Einachsenschwenkung gemessen wird, und wobei der Nassabriebfestigkeitsindex gemäß einem Verfahren gemessen wird, das beim Modifizierten ISO 4649 beschrieben wird, unter Einsatz eines Zwick DIN Abschleifers unter Verwendung eines wasserfesten Schleifbandes, und wobei eine rotierende Trommel, die mit Schleifpapier bedeckt ist, zum Teil in eine darunter befindliche Wanne mit Wasser eingetaucht wird, wodurch gewährleistet wird, dass das Schleifband in Kontakt mit dem Testmuster ist und während des Testens gleichmäßig befeuchtet wird.

2. Verfahren für die Herstellung eines Materials, umfassend Naturkautschuk und einen smektischen Schichtton, wobei der Ton im Naturkautschuk dispergiert ist, wobei der smektische Ton ausgewählt wird aus der Gruppe, bestehend aus Bentonit und Hektorit, und wobei das Verfahren umfasst:
a) Zubereitung einer Aufschlämmung aus smektischem Ton durch das Dispergieren des Tons in Wasser;
b) Zubereitung eines Gemisches aus Naturkautschuklatex mit Vulkanisierungschemikalien;
c) Mischen der Aufschlämmung und des Kautschuklatex enthaltenden Gemisches unter ständigem Rühren, um ein zweites Gemisch auszubilden, bis das Gemisch koaguliert; und
d) Trocken des Gemisches auf weniger als 1,5 % Wasser;
wobei das Material einen Reibungskoeffizienten von nicht weniger als 2,3 µ und einen Nassabriebfestigkeitsindex von nicht weniger als 100 % aufweist, wobei der Reibungskoeffizient mit einem Plint TE 75P Kautschukreibungstestgerät gemessen wird, mit Hilfe einer Testlast von 2N, einer Gleitgeschwindigkeit von 1 mm/s, einer Verweilzeit von 5 Sekunden, einer maximalen Reibung von 50N und dem Einsatz von 4 Zyklen, wobei die Reibungskraft durch Einachsenschwenkung gemessen wird, und wobei der Nassabriebfestigkeitsindex gemäß einem Verfahren gemessen wird, das beim Modifizierten ISO 4649 beschrieben wird, unter Einsatz eines Zwick DIN Abschleifers unter Verwendung eines wasserfesten Schleifbandes, und wobei eine rotierende Trommel, die mit Schleifpapier bedeckt ist, zum Teil in eine darunter befindliche Wanne mit Wasser eingetaucht wird, wodurch gewährleistet wird, dass das Schleifband in Kontakt mit dem Testmuster ist und während des Testens gleichmäßig befeuchtet wird.

3. Verfahren nach Anspruch 1 oder 2, **dadurch gekennzeichnet, dass** die Vulkanisierungschemikalien zumindest eines von einem Aushärtmittel, einem Antioxidans, einem Aktivierungsmittel, einem Beschleuniger, einem Dispersionsmittel und einem Pigment umfasst.

4. Verfahren nach Anspruch 2, **dadurch gekennzeichnet, dass** eine anionische grenzflächenaktive Substanz beim Schritt a) oder dem zweiten Gemisch hinzugefügt wird.

5. Material, hergestellt nach dem Verfahren gemäß Anspruch 1 oder nach dem Verfahren gemäß Anspruch 2.

6. Material nach Anspruch 5, **dadurch gekennzeichnet, dass** der Nassabriebfestigkeitsindex im Bereich von 101 % bis 136 % liegt.

7. Material nach Anspruch 5, **dadurch gekennzeichnet, dass** das Material 1 bis 20 Gewichtsteile Ton pro hundert Gewichtsteile Kautschuk umfasst.

8. Material nach Anspruch 5, **dadurch gekennzeichnet, dass** der Ton Hektorit ist und dass das Hektorit 6 bis 12 Gewichtsteile pro hundert Gewichtsteile Kautschuk umfasst.

9. Material nach Anspruch 5, **dadurch gekennzeichnet, dass** das Schichttonmaterial Natriumbentonit ist.

10. Herstellungsartikel, umfassend die Zusammensetzung von Anspruch 5.

11. Artikel nach Anspruch 10, ausgewählt aus der Gruppe, bestehend aus Reifen, Förderbändern, Transmissionsriemenbelägen, Schuhsohlen, Industrie-Boderunatten, Riemenscheiben- und Spannrollenbelägen und Förderbändern.

12. Nutzung eines Materials nach einem der Ansprüche 5 bis 9 im Bergwerksbetrieb.

## Revendications

1. Procédé pour réaliser un matériau comprenant du caoutchouc naturel et de l'argile smectite stratifiée, dans lequel l'argile est dispersée dans le caoutchouc naturel, le procédé comprenant les étapes consistant à :
a) préparer un mélange d'argile et de latex de caoutchouc ; et
b) ajouter au mélange des produits chimiques de vulcanisation et un agent tensioactif anionique ; et
c) coaguler le mélange pour former le matériau ; et
d) sécher le matériau obtenu à l'étape c) ;
dans lequel le matériau a un coefficient de frottement qui n'est pas inférieur à 2,3 µ et un indice de résistance à l'abrasion à l'état humide qui n'est pas inférieur à 100 %, le coefficient de frottement étant mesuré avec une machine de test de frottement de caoutchouc Plint TE 75P par utilisation d'une charge de test de 2 N, une vitesse de coulissement de 1 mm/s, une période de repos de 5 secondes, un frottement maximum de 50 N et par l'utilisation de 4 cycles, la force de frottement étant mesurée à travers un mouvement transversal monoaxial, et l'indice de résistance à l'abrasion à l'état humide étant mesuré selon un processus décrit dans la norme ISO 4649 modifiée en utilisant un dispositif d'abrasion Zwick DIN en utilisant une courroie abrasive résistant à l'eau, et dans lequel un tambour rotatif recouvert de papier abrasif est partiellement immergé dans une cuve d'eau située en dessous, en garantissant ainsi que la bande abrasive soit en contact avec le spécimen de test et humidifiée de manière uniforme pendant un test.

2. Procédé pour réaliser un matériau comprenant du caoutchouc naturel et une argile smectite stratifiée, dans lequel l'argile est dispersée dans le caoutchouc naturel, l'argile smectite étant sélectionnée dans le groupe constitué de bentonite et hectorite, le procédé comportant les étapes consistant à :
a) préparer une suspension d'argile smectite en dispersant ladite argile dans de l'eau ;
b) préparer un mélange de latex de caoutchouc naturel avec des produits chimiques de vulcanisation ;
c) mélanger la suspension et le mélange contenant du latex de caoutchouc avec une agitation continue pour former un second mélange jusqu'à ce que le mélange coagule, et
d) sécher le mélange jusqu'à moins de 1,5 % d'eau ;
dans lequel le matériau a un coefficient de frottement qui n'est pas inférieur à 2,3 µ et a un indice de résistance à l'abrasion à l'état humide qui n'est pas inférieur à 100 % ;
le coefficient de frottement étant mesuré à l'aide d'une machine de test de frottement de caoutchouc Plint TE 75P en utilisant une charge de test de 2 N, une vitesse de coulissement de 1 mm/s, une période de repos de 5 secondes, un frottement maximum de 50 N et par l'utilisation de 4 cycles, la force de frottement étant mesurée à travers un déplacement transversal monoaxial, et l'indice de résistance à l'abrasion à l'état humide étant mesuré selon un processus décrit dans la norme ISO 4649 modifiée en utilisant un dispositif d'abrasion Zwick DIN en utilisant une bande abrasive résistant à l'eau, et dans lequel un tambour rotatif recouvert de papier abrasif est partiellement immergé dans une cuve d'eau située en dessous, en garantissant ainsi que la bande abrasive vient en contact avec le spécimen de test et est humidifiée de manière uniforme pendant le test.

3. Procédé selon la revendication 1 ou 2, dans lequel les produits chimiques de vulcanisation comportent au moins un parmi un agent de durcissement, un antioxydant, un activateur, un accélérateur, un agent de dispersion et un pigment.

4. Procédé selon la revendication 2, dans lequel un agent tensioactif anionique est ajouté à l'étape a) ou au second mélange.

5. Matériau produit dans le procédé de la revendication 1 ou par le procédé de la revendication 2.

6. Matériau selon la revendication 5, dans lequel l'indice de résistance à l'abrasion à l'état humide est compris entre environ 101 % et 136 %.

7. Matériau selon la revendication 5, dans lequel le matériau comporte 1 à 20 parties d'argile pour 100 parties en poids de caoutchouc.

8. Matériau selon la revendication 5, dans lequel l'argile est de l'hectorite, et l'hectorite constitue 6 à 12 parties pour 100 parties en poids de caoutchouc.

9. Matériau selon la revendication 5, dans lequel le matériau d'argile stratifié est de la bentonite de sodium.

10. Article de fabrication comprenant la composition de la revendication 5.

11. Article selon la revendication 10, sélectionné dans le groupe comprenant des pneumatiques, des courroies de convoyeur, des revêtements de courroie de transmission, des semelles de chaussure, des tapis de sol industriel, un garnissage de poulie monté fou et un matériau de courroie de convoyeur.

12. Utilisation d'un matériau selon l'une quelconque des revendications 5 à 9 dans des opérations minières.
